# EUROPEAN PATENT APPLICATION

(11) **EP 4 641 907 A1**
(43) Date of publication of application: **29.10.2025**
(21) Application number: 24172187.7
(22) Date of filing: 24.04.2024
(51) Int. Cl.: H02M 7/483, H02M 1/096

(54) **FLYING CAPACITOR MULTILEVEL CONVERTER**

(71) Applicant: ABB SCHWEIZ AG, 5400 Baden (CH)
(72) Inventor: Schweizer, Mario, 5406 Rütihof (CH); Park, Ki-Bum, 5405 Baden-Dättwil (CH); Pettersson, Sami, 5405 Baden-Dättwil (CH)
(74) Representative: Kolster Oy Ab

(57) **Abstract**

A flying capacitor multilevel converter comprising at least one phase leg circuit (100) comprising a first group of series connected controllable semiconductor switches (S11, S12, S13, S14) and a second group of series connected controllable semiconductor switches (S21, S22, S23, S24), each controllable semiconductor switch being provided with a driver (20) configured to drive the controllable semiconductor switch, at least one capacitor (C_{fc}), each of the at least one capacitor being individually connected between a node connecting two adjacent controllable semiconductor switches of the first group and a node connecting respective two adjacent controllable semiconductor switches of the second group, and a power supply arrangement comprising at least two power supplies (10), wherein each power supply (10) is configured to supply power to at least one driver (20) and wherein each power supply is configured to be supplied by a voltage over at least one controllable semiconductor switch.

## Description

### FIELD OF THE INVENTION

The present invention relates to a flying capacitor multilevel converter.

### BACKGROUND

The flying capacitor multilevel converter topology with low voltage MOSFETs, for example, can bring a significant converter weight reduction. The concept can be applied to different applications, such as photovoltaic (PV) inverters, UPS systems, high-speed drives, battery energy storage systems (BESS) in a wide power range, e.g. from 3 kW single-phase up to 300 kW three-phase systems.

The topology may be implemented e.g. by a high number (e.g. up to 48) of low-voltage (e.g. 150 V) MOSFETs, low-voltage (e.g. 100 V) GaN HEMTs, or other type of controllable semiconductor switches, and respective gate drive circuits, or generally drivers or driver circuits. As such drivers may reside on different voltage levels, usually isolated power supplies, or power supply circuits, may be required to feed the supply voltages for the individual drivers of the controllable semiconductor switches. However, such isolated power supplies for the drivers may cause significant extra cost, especially if the number of levels of the used topology is high, and also require a lot of space.

Another alternative is to use so-called cascaded bootstrap circuit(s) to supply a plurality of drivers from a single power source via bootstrap diodes. A drawback of such a cascaded bootstrap circuit is, however, that each bootstrap diode will add a voltage drop of e.g. about 1 V and therefore, the semiconductor switches in the end of the boot-strap circuit chain will see a significantly reduced control voltage compared to an initial supply voltage of the power source.

### BRIEF DESCRIPTION

An object of the present invention is thus to provide a method and an apparatus for implementing the method so as to overcome the above problems or at least to alleviate the above problems. The object of the invention is achieved by a flying capacitor multilevel converter and a method which are characterized by what is stated in the independent claims. The preferred embodiments of the invention are disclosed in the dependent claims.

The invention is based on the idea of providing power to the drivers by power supplies for which power is supplied by a voltage over at least one controllable semiconductor switch. In other words, the energy for the driver power supplies is harvested from voltage differences of the flying capacitors of the converter, which voltage differences appear over the controllable semiconductor switches in the flying capacitor multilevel converter topology.

An advantage of the solution of the invention is that the drivers of a flying capacitor multilevel converter can be supplied without the need for isolated power supplies and with sufficient voltages also in case of higher number of levels in the converter, for example.

### BRIEF DESCRIPTION OF THE DRAWINGS

In the following the invention will be described in greater detail by means of preferred embodiments with reference to the accompanying drawings, in which
Figure 1 illustrates an example of a converter circuit according to an embodiment;
Figure 2 illustrates diagrams according to an embodiment;
Figure 3 illustrates an example of a circuit according to an embodiment;
Figure 4 illustrates an example of a converter circuit according to an embodiment;
Figure 5 illustrates a diagram according to an embodiment;
Figure 6 illustrates an example of a circuit according to an embodiment;
Figure 7 illustrates an example of a circuit according to an embodiment;
Figure 8 illustrates an example of a converter circuit according to an embodiment; and
Figure 9 illustrates an example of a three-phase converter circuit according to an embodiment.

### DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures. The application of the various embodiments described herein is not limited to any specific system, but they can be used in connection with various electric systems. Moreover, the use of the various embodiments described herein is not limited to systems employing any specific fundamental frequency or any specific voltage level(s), for example.

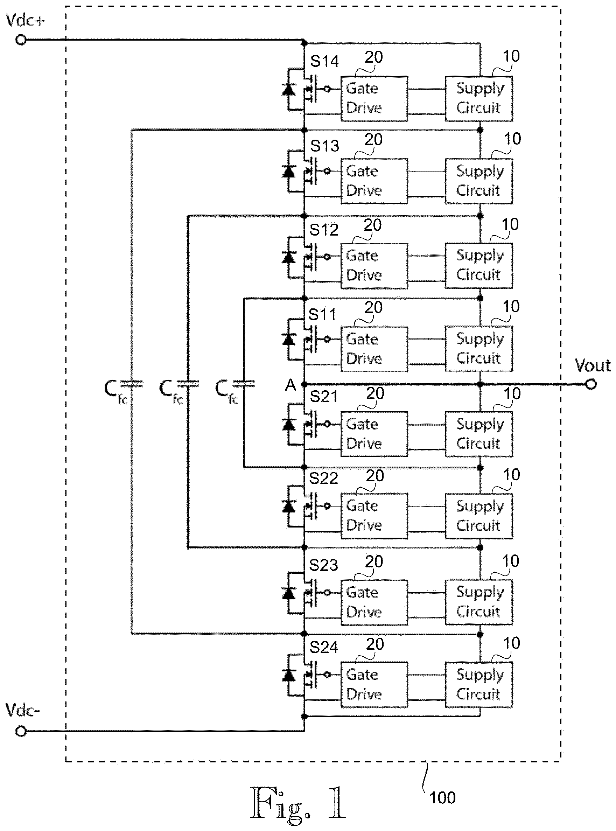

Figure 1 illustrates an example of a converter circuit according to an embodiment. According to an embodiment, a flying capacitor multilevel converter comprises two input terminals (poles) Vdc+, Vdc-. The input Vdc+, Vdc- may be supplied from a suitable DC power source (not shown in the figures) such as a photovoltaic (PV) power generation system comprising one or more photovoltaic panels, for instance. Another example of a possible DC power source is a wind power generation system, such as a wind farm, which may comprise one or more wind generators, driven by one or more wind turbines, for instance. Other type(s) of DC power source(s) or any combinations thereof could also be utilized, such as a fuel cell DC power source or a battery storage DC power source. The flying capacitor multilevel converter comprises at least one phase leg circuit 100. The number of such phase leg circuits 100 in the converter may be any number, such as one, two, three, four or more. For simplicity, Figure 1 only shows one such phase leg circuit 100. Moreover, the number of the levels of the flying capacitor multilevel converter could vary and could be any number such as two, three, four, five or higher, for instance.

According to an embodiment, each of the at least one phase leg circuit comprises a first group of at least two series connected controllable semiconductor switches and a second group of at least two series connected controllable semiconductor switches. Moreover, the first group and the second group are connected in series between the input terminals of the converter and a phase output terminal is connected to a node connecting the first group to the second group. In the example of Figure 1, the exemplary phase leg circuit 100 comprises a first group (upper arm) of four series connected controllable semiconductor switches S11, S12, S13, S14 and a second group (lower arm) of four series connected controllable semiconductor switches S21, S22, S23, S24, which groups are connected in series between the two input terminals Vdc+, Vdc- of the converter. A phase (e.g. AC phase) output terminal Vout is connected to the node A connecting the first group to the second group. The number of series connected controllable semiconductor switches in each such group may be two or any number greater than two, such as three, four, five, six seven, eight, nine or more. According to an embodiment, the number of controllable semiconductor switches in the first group is equal to the number of controllable semiconductor switches in the second group of the (each) phase leg circuit 100. The controllable semiconductor switches S11, S12, S13, S14, S21, S22, S23, S24 may be transistors, such as metal oxide semiconductor field effect transistors (MOSFET), high-electron-mobility transistors (HEMT), e.g. gallium nitride (GaN) HEMTs, or insulated-gate bipolar transistors (IGBT), or thyristors or other controllable semiconductor switches, for example. The voltage rating of the controllable semiconductor switches may vary and may be selected on the basis of the system configuration and/or application thereof, for example. As an example, the controllable semiconductor switches may be low-voltage (generally having the rated voltage < 600 V) devices, e.g. with 60 V, 80 V, 100 V, 150 V or 200 V voltage rating, or high-voltage devices. The controllable semiconductor switches may be connected in series by their switched terminals e.g. as illustrated in the example of Figure 1 in a manner known per se. Term switched terminals herein generally refers e.g. to drain and source terminals or to emitter and collector terminals depending on the type of the controllable semiconductor switches. In the example of Figure 1, the drain terminals are connected towards the positive input terminal Vdc+ and the source terminals are connected towards the negative input terminal Vdc-. In addition to the switched terminals, the controllable semiconductor switches S11, S12, S13, S14, S21, S22, S23, S24 comprise a third terminal which is referred to as a control terminal herein. Term control terminal herein generally refers to e.g. a gate terminal or a base terminal depending on the type of the controllable semiconductor switches, and via which control terminal the switching action of the controllable semiconductor switch can be controlled. The controllable semiconductor switches S11, S12, S13, S14, S21, S22, S23, S24 may be provided with respective antiparallel diodes as shown in the example of Figure 1. According to an embodiment, each controllable semiconductor switch is provided with a driver 20 (Gate Drive) configured to drive the control terminal of the respective controllable semiconductor switch. Accordingly, in the example of Figure 1 the phase leg circuit 100 comprises a driver 20 for each of the controllable semiconductor switches S11, S12, S13, S14, S21, S22, S23, S24. Generally, the driver refers to a circuit or a component (apparatus, device, unit) which can be used for driving (controlling) the respective controllable semiconductor switch via the control terminal of the controllable semiconductor switch in a manner known per se. The implementation of the drivers 20 depends on the controllable semiconductor switches S11-S24. It should be noted that the control of the controllable semiconductor switches of such a flying capacitor multilevel converter as such can be implemented in several ways and is considered known to a person skilled in the art as such and hence need not to be explained in more detail herein. As an example, such a flying capacitor multilevel converter could be controlled with a suitable pulse width modulation (PWM) scheme and could be used as an inverter. Also, any further control connections, e.g. for controlling the drivers 20, or further control arrangements therefor have been omitted from the figures for the sake of clarity.

According to an embodiment, each of the at least one phase leg circuit 100 further comprises at least one first capacitor, each of the at least one first capacitor being individually connected between a node connecting two adjacent controllable semiconductor switches of the first group and a node connecting respective two adjacent controllable semiconductor switches of the second group. In the example of Figure 1, there are three first capacitors, i.e. flying capacitors, C_{fc} such that each one of them is individually connected between a node connecting two adjacent controllable semiconductor switches of the first group and a node connecting respective two adjacent controllable semiconductor switches of the second group. According to an embodiment, each such node connecting two adjacent controllable semiconductor switches of the first group, e.g. the nodes between controllable semiconductor switches S11 and S12, between controllable semiconductor switches S12 and S13 and between controllable semiconductor switches S13 and S14, is connected to a node connecting respective two adjacent controllable semiconductor switches of the second group, e.g. the nodes between controllable semiconductor switches S21 and S22, between controllable semiconductor switches S22 and S23 and between controllable semiconductor switches S23 and S24 by a respective flying capacitor C_{fc}. Consequently, the number of the flying capacitors C_{fc} may be (n-2)/2, where n is the number of the controllable semiconductor switches S11-S24. Term capacitor herein generally refers to an element or a circuit exhibiting capacitance and such a capacitor may comprise one or more capacitor components (units, devices), for example.

According to an embodiment, each of the at least one phase leg circuit 100 further comprises a power supply arrangement for the drivers 20 of the controllable semiconductor switches S11-S24, the power supply arrangement comprising at least two power supplies, wherein each power supply is configured to supply power to at least one driver and wherein each power supply is configured to be supplied by a voltage over at least one controllable semiconductor switch. Term power supply herein generally refers to a circuit or a component (apparatus, device, unit) which can be used for supplying power to one or more drivers 20 preferably at a suitable (e.g. predetermined) voltage level or voltage level range. According to an embodiment, the power supply may comprise a voltage regulator. The voltage level or voltage level range of the output of the power supply 10 may depend on e.g. the type of the driver 20 and/or of the controllable semiconductor switch, for instance. Such a power supply 10 may comprise a DC power supply, such as a DC/DC power supply (a DC-to-DC converter), configured to generate a predetermined, preferably regulated, output voltage or voltage range. The output voltage supplied by the power supply 10 to the driver 20, e.g. in case of MOSFETs, could be about 12 V, e.g. between about 9 V and bout 15 V. In the example of Figure 1, there is one power supply 10 (supply circuit) for each of the drivers 20, i.e. one power supply 10 supplies power to one driver 20. However, one such power supply 10 could supply power also to more than one driver 20 as will be described below. In the example of Figure 1, each of the power supplies 10 is supplied power by a voltage over one respective controllable semiconductor switch. According to an embodiment, input terminals of the power supply may be connected to the switched terminals of the one controllable semiconductor switch. Accordingly, an input of each of the power supplies 10 in the example of Figure 1 is connected to the switched terminals of one respective controllable semiconductor switch whereby the voltage over the respective controllable semiconductor switch, i.e. between the switched terminals thereof, is connected to the input of the power supply 10. As a result, the voltage differences of the flying (first) capacitors C_{fc}, e.g. between terminals of two capacitors or between a capacitor and one of the two input terminals Vdc+, Vdc-, which act across the controllable semiconductor switches S11-S24, can thus be used for supplying the power supplies 10. According to an embodiment, the power supply arrangement may comprise at least two power supplies for the first group connected in series between the two input terminals Vdc+, Vdc- of the converter and at least two power supplies for the second group connected in series between the two input terminals Vdc+, Vdc- of the converter. Thus, e.g. as shown in the example of Figure 1, the power supplies 10 may be connected in series between the two input terminals Vdc+, Vdc- of the converter, i.e. the inputs of the power supplies 10 may be connected in series between the two input terminals Vdc+, Vdc- of the converter. It is also possible that the power supplies are not connected in series as will be shown in an example below.

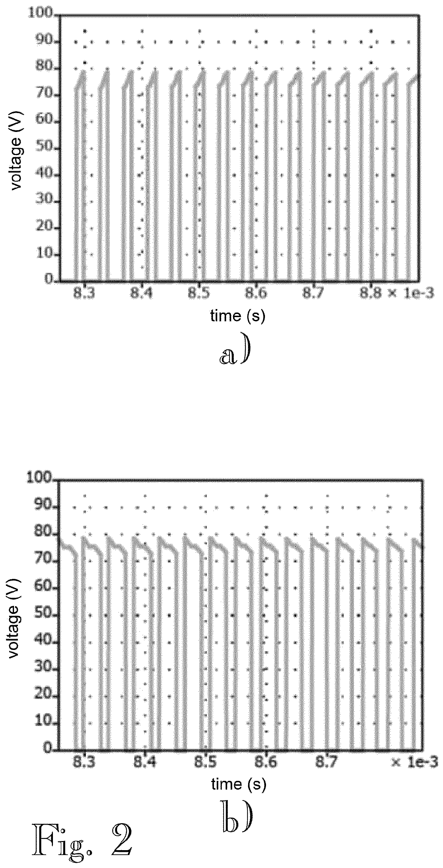

Hence, an idea of the general embodiment described above is the principle of harvesting the power (energy) for the driver 20 power supplies 10 directly from the voltage differences of the flying capacitors C_{fc}. The concept can be gradually more effective the higher the number of the levels the converter has and/or the lower the voltage difference of the flying capacitors C_{fc} becomes. During normal operation of the flying capacitor multilevel converter, the voltage difference between two adjacent flying capacitors, which can be seen across a controllable semiconductor switch when it is turned off, is typically a pulsed voltage, because the controllable semiconductor switches turn on and turn off repeatedly during normal operation. Therefore, the energy for the driver circuit may be buffered into a (small) buffer capacitor, for example. During stand-by of the converter (all the controllable semiconductor switches are turned off) the voltage difference between two adjacent flying capacitors C_{fc} is a DC voltage, which may be stabilized by e.g. a precharge resistor network (if present). Nevertheless, it is possible to extract sufficient power to feed (supply) the individual driver power supplies 10 essentially directly from such voltage differences, because the flying capacitors C_{fc} thus act as energy sources. The amount of energy extracted from the flying capacitors can be negligibly small and thus has no significant impact on the voltage balancing of the flying capacitors themselves, for example. The voltage balancing can be normally ensured with natural balancing or active balancing principles, for instance. Figure 2 illustrates voltages across two controllable semiconductor switches of the circuit shown in the example of Figure 1. More specifically, alternative a) of Figure 2 shows the pulsed voltage over controllable semiconductor switch S13 and alternative b) of Figure 2 shows the pulsed voltage over controllable semiconductor switch S22. During normal operation, all the controllable semiconductor switches in a flying capacitor multilevel converter are continuously switching. Whenever a controllable semiconductor switch is turned off for an instant, the voltage difference of two flying capacitors is available across the controllable semiconductor switch in question. During this time period, the voltage difference can be used to charge an intermediate buffer capacitor, for example, with sufficient amount of energy that is required for the driver of the corresponding controllable semiconductor switch. In the following some possible embodiments to extract the energy from the flying capacitor voltage differences will be described in more detail.

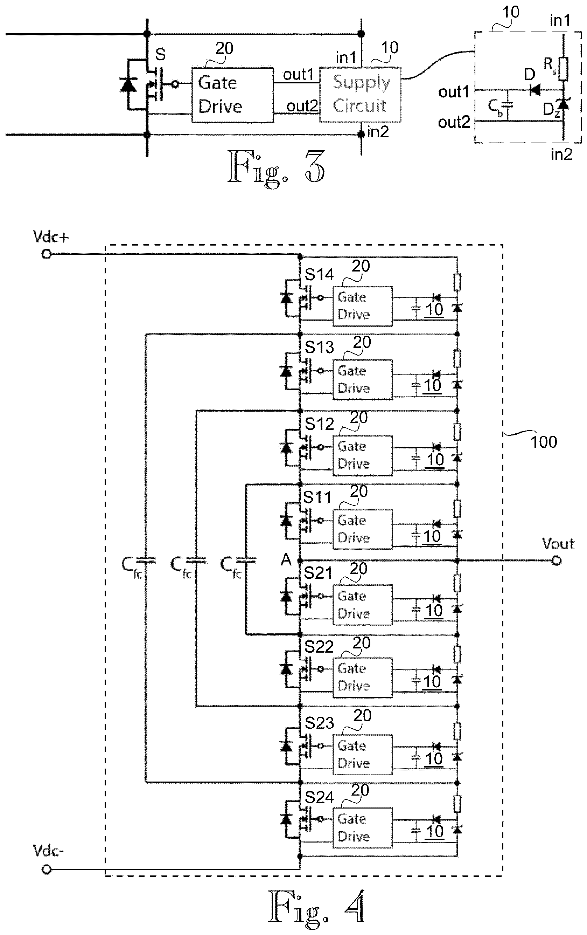

According to an embodiment, the power supply 10 comprises a resistor and a Zener diode connected in series between input terminals of the power supply and a diode connected between a node connecting the resistor and the Zener diode and an output terminal of the power supply. Figure 3 illustrates an example of the power supply according to this embodiment. In the example, a possible internal configuration of the power supply 10, in connection with one controllable semiconductor switch S and its driver 20, is illustrated separately. In the example, the power supply 10 comprises a resistor Rₛ and a Zener diode D_{z} connected in series between input terminals in1 (positive), in2 (negative) of the power supply 10 and a diode D connected between a node connecting the resistor Rₛ and the Zener diode D_{z} and an output terminal out1 of the power supply 10. Moreover, according to an embodiment, the power supply 10 may comprise a (second) capacitor C_{b} connected between output terminals out1 (positive), out2 (negative) of the power supply 10, as also illustrated in the example. The values of the components in the exemplary configuration of the power supply 10 may be suitably selected based on e.g. the required voltage to be supplied to the driver 20. For example, when about 12 V operating voltage should be supplied to the driver 20 from the output out1, out2 of the power supply 10, the Zener diode D_{z} could be a 12 V Zener diode and the diode could be a small signal diode (e.g. <15 V). Figure 4 illustrates an example of a converter circuit according to an embodiment which corresponds to that of Figure 1 and in which each of the power supplies 10 have the exemplary configuration shown in Figure 3.

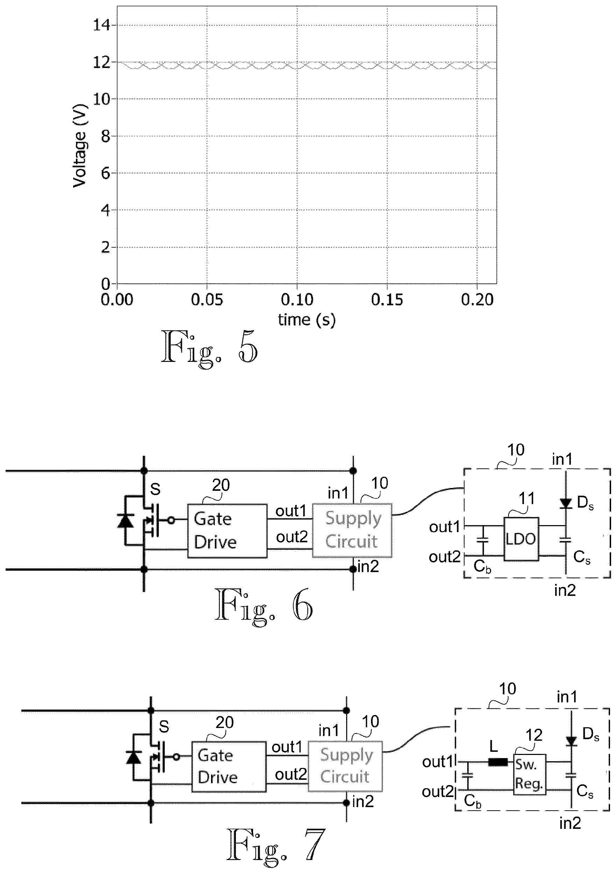

The exemplary configuration of the power supply 10 comprising the series resistor Rₛ, the Zener diode D_{z} and the (small signal) diode described above can be used to supply the required voltage, e.g. about 12 V, to the driver 20, e.g. a MOSFET gate driver, essentially directly from the voltage appearing over the controllable semiconductor switch S (e.g. any one of S11-S24), which may be e.g. a voltage difference of two adjacent flying capacitors C_{fc} or a voltage difference between a flying capacitor C_{fc} and one of the input terminals (poles) Vdc+ and Vdc-. An additional effect is that such a combination of a Zener diode D_{z} and a series resistor Rₛ can provide a precharge resistor network for the flying capacitor multilevel converters. For example, during a startup of the flying capacitor multilevel inverter, it may be required to precharge the flying capacitors C_{fc} to their nominal voltages. This may be readily accomplished by using a resistor network that precharges the capacitors directly from the dc-link Vdc+, Vdc-. Such a resistor network is thus readily present in the power supply configuration in the exemplary embodiment illustrated in Figures 3 and 4 and described above. Depending on the power consumed by the driver 20 and the voltage difference over the controllable semiconductor switch S, such a power supply 10 may have additional losses in the series resistor Rₛ. However, the higher the number of the levels of the flying capacitor multilevel converter becomes and/or the lower the voltage class of the controllable semiconductor switch(es) S, the lower the voltage and the more effective the solution becomes as the resulting losses in the series resistor Rₛ are reduced. Figure 5 illustrates a diagram according to an embodiment. The diagram illustrates a situation in which the power supply configuration shown in the example of Figure 3 is simulated in a flying capacitor topology using 150 V and 100 V MOSFETs as the controllable semiconductor switches S and a realistic driver 20 power consumption. The simulated driver supply voltage is shown in Figure 5. The ripple on the supply voltage (3%) can be reduced by either reducing the series resistance Rₛ or by increasing the buffer capacitance C_{b}, what has an impact on the loss balance, for example. Two different configurations with 150 V and 100 V MOSFETs, and a buffer capacitance C_{b} of 50 µF and a device switching frequency of 24 kHz were simulated. The resulting losses per series resistor for the configuration with 150 V MOSFETs were 0.27 W. And the losses were reduced to 0.18 W per series resistor for the configuration with 100V MOSFETs. During a stand-by state (all the controllable semiconductor switches are turned off), the current consumption of the driver(s) 20 reduces to 2.5 mA. The total dc-link voltage may be shared essentially equally across all the controllable semiconductor switches S, S11-S24 and therefore the voltage across the power supplies 10 can be reduced by 50%, but it is still sufficient to power the leakage current of the driver(s) 20, for instance. The losses in the series resistors are essentially similar to the losses during a normal operation of the converter.

According to another embodiment, the power supply comprises a low-dropout regulator. Moreover, according to an embodiment, the power supply further comprises a diode and a third capacitor connected in series between input terminals of the power supply. Figure 6 illustrates an example of the power supply according to this embodiment. In the example, a possible internal configuration of the power supply 10, in connection with one controllable semiconductor switch S and its driver 20, is illustrated separately. In the example, the power supply 10 comprises a low-dropout (LDO) regulator 11, i.e. a type of a DC linear voltage regulator, with which the voltage supplied to the input in1, in2 of the power supply 10 can be regulated to a suitable level to be outputted from the output out1, out2 of the power supply 10 to the driver 20. The exemplary configuration further comprises a diode Dₛ, which is preferably a Schottky diode, and a (third) capacitor Cₛ connected in series between the input terminals in1, in2 of the power supply 10 such that the capacitor Cₛ is connected between input terminals of the regulator 11. Moreover, according to an embodiment, the power supply 10 may comprise a (second) capacitor C_{b} connected between the output terminals out1, out2 of the power supply 10, as also illustrated in the example of Figure 6. The values of the components in the exemplary configuration of the power supply 10 may be suitably selected based on e.g. the required voltage supplied to the driver 20. For example, the diode Dₛ could be e.g. a 150 V Schottky diode. An advantage of the power supply 10 configuration according to this embodiment is a possibly more stable output voltage of the power supply 10 and/or the value of the required buffer capacitance C_{b} could be reduced compared to the configuration with the Zener diode in the example of Figure 3, for instance.

According to another embodiment, the power supply comprises a switching regulator. Moreover, according to an embodiment, the power supply further comprises a diode and a third capacitor connected in series between input terminals of the power supply. Figure 7 illustrates an example of the power supply according to this embodiment. In the example, a possible internal configuration of the power supply 10, in connection with one controllable semiconductor switch S and its driver 20, is illustrated separately. In the example, the power supply 10 comprises a switching regulator (switched regulator) 12, i.e. a type of a DC/DC voltage regulator, with which the voltage supplied to the inputin1, in2 of the power supply 10 can be regulated, by using one or more switching elements, to a suitable level to be outputted from the output out1, out2 of the power supply 10 to the driver 20. The exemplary configuration further comprises a diode Dₛ, which is preferably a Schottky diode, and a (third) capacitor Cₛ connected in series between the input terminals in1, in2 of the power supply 10 such that the capacitor Cₛ is connected between input terminals of the regulator 12. Moreover, according to an embodiment, the power supply 10 may comprise a (second) capacitor C_{b} connected between the output terminals out1, out2 of the power supply 10, as also illustrated in the example of Figure 6. Additionally, a small filtering choke L, e.g. a surface mounted device (SMD) type, or a ferrite bead could be used in the output of the switching regulator (switched regulator) 12 as illustrated in Figure 7. The values of the components in the exemplary configuration of the power supply 10 may be suitably selected based on e.g. the required voltage supplied to the driver 20. For example, the diode Dₛ could be e.g. a 150 V Schottky diode. An advantage of the power supply 10 configuration according to this embodiment is that it may have reduced losses, for instance.

According to an embodiment, each power supply 10 is configured to be supplied by a voltage over (only) one controllable semiconductor switch S, S11-S24 and to supply power individually to a respective driver 20 of the controllable semiconductor switch in question. Thus, according to an embodiment, there could be a separate power supply 10 for each of the drivers 20 as shown e.g. in the examples of Figures 1 and 4.

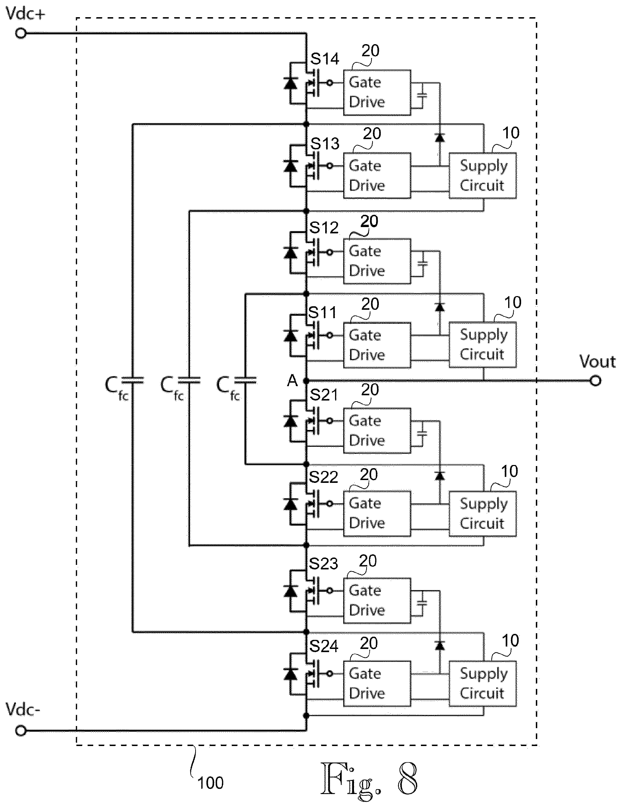

According to another embodiment, each power supply 10 is configured to be supplied by a voltage over (only) one controllable semiconductor switch S, S11-S24 and at least one power supply 10 is configured to supply power to a respective driver of the controllable semiconductor switch in question and to a driver of at least one other controllable semiconductor switch. Said at least one other controllable semiconductor switch may comprise at least one adjacent controllable semiconductor switch. According to an embodiment each power supply 10 is configured to be supplied by the voltage over one controllable semiconductor switch S, S11-S24 and to supply power to the respective driver 20 of the controllable semiconductor switch in question and to a driver of at least one other controllable semiconductor switch. Figure 8 shows an example in which each of the power supplies 10 is supplied by the voltage over one respective controllable semiconductor switch. Moreover, in the example each of the power supplies 10 supply power to the respective driver 20 of the controllable semiconductor switch in question and additionally to the driver 20 of another controllable semiconductor switch which is adjacent to the respective controllable semiconductor switch, the voltage over which is supplied to the power supply 10. Generally, each of the power supplies 10 could supply power to one or more drivers 20. In other words, it is possible to thus combine the power supply according to any embodiment described herein with the bootstrap concept in various ways. As an example, such a combined topology could be used for drivers with high power consumption in order to reduce the number of switching regulators, if implementing the power supplies 10 with switching regulators.

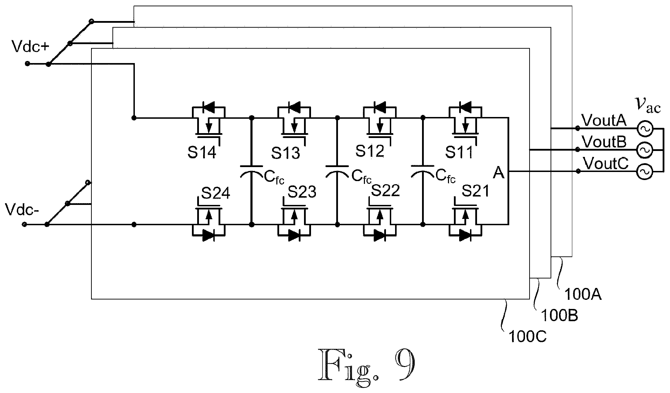

Figure 9 illustrates an example of a three-phase flying capacitor multilevel converter circuit according to an embodiment. The exemplary three-phase flying capacitor multilevel converter circuit comprises three phase leg circuits 100A, 100B, 100C which may be implemented according to any one of the embodiments described herein or according to any combination of the embodiments described herein. For the sake of clarity, the drivers of the controllable semiconductor switches S11, S12, S13, S14, S21, S22, S23, S24 or the power supplies of the drivers are not shown in Figure 9. The DC inputs of the three phase leg circuits 100A, 100B, 100C are connected in parallel between the input terminals (poles) Vdc+, Vdc- of the converter and the respective AC outputs VoutA, VoutB, VoutC of the three phase leg circuits 100A, 100B, 100C provide a three-phase AC output of the converter with a three-phase AC voltage v_{ac}. The number of such phase leg circuits 100A, 100B, 100C in a multi-phase flying capacitor multilevel converter may be any number, such as two, three, four, five, six or more.

According to an embodiment, a method is provided for supplying power in a flying capacitor multilevel converter comprising at least one phase leg circuit, each of the at least one phase leg circuit comprising a first group of series connected controllable semiconductor switches and a second group of series connected controllable semiconductor switches, each controllable semiconductor switch being provided with a driver configured to drive a control terminal of the respective controllable semiconductor switch, wherein the first group and the second group are connected in series between two input terminals of the converter, a phase output terminal connected to a node connecting the first group to the second group, at least one capacitor, each of the at least one capacitor being individually connected between a node connecting two adjacent controllable semiconductor switches of the first group and a node connecting respective two adjacent controllable semiconductor switches of the second group, and a power supply arrangement for the drivers of the controllable semiconductor switches, the power supply arrangement comprising at least two power supplies, wherein each power supply is configured to supply power to at least one driver. The method comprises supplying each power supply by a voltage over at least one controllable semiconductor switch. According to an embodiment, the supplying comprises supplying each power supply by a voltage between switched terminals of one controllable semiconductor switch.

It will be obvious to a person skilled in the art that, as the technology advances, the inventive concept can be implemented in various ways. The invention and its embodiments are not limited to the examples described above but may vary within the scope of the claims.

## Claims

1. A flying capacitor multilevel converter comprising:
two input terminals; and
at least one phase leg circuit, each of the at least one phase leg circuit comprising:
a first group of at least two series connected controllable semiconductor switches and a second group of at least two series connected controllable semiconductor switches, each controllable semiconductor switch being provided with a driver configured to drive a control terminal of the respective controllable semiconductor switch, wherein the first group and the second group are connected in series between the two input terminals of the converter;
a phase output terminal connected to a node connecting the first group to the second group;
at least one first capacitor, each of the at least one first capacitor being individually connected between a node connecting two adjacent controllable semiconductor switches of the first group and a node connecting respective two adjacent controllable semiconductor switches of the second group; and
a power supply arrangement for the drivers of the controllable semiconductor switches, the power supply arrangement comprising at least two power supplies, wherein each power supply is configured to supply power to at least one driver and wherein each power supply is configured to be supplied by a voltage over at least one controllable semiconductor switch.

2. A flying capacitor multilevel converter as claimed in claim 1, wherein each power supply is configured to be supplied by a voltage over one controllable semiconductor switch and to supply power individually to a respective driver of the controllable semiconductor switch in question.

3. A flying capacitor multilevel converter as claimed in claim 1, wherein each power supply is configured to be supplied by a voltage over one controllable semiconductor switch and at least one power supply is configured to supply power to a respective driver of the controllable semiconductor switch in question and to a driver of at least one other controllable semiconductor switch.

4. A flying capacitor multilevel converter as claimed in claim 1 or 2, wherein the power supply arrangement comprises at least two power supplies for the first group connected in series between the two input terminals of the converter and at least two power supplies for the second group connected in series between the two input terminals of the converter.

5. A flying capacitor multilevel converter as claimed in any one of claims 2 to 4, wherein input terminals of the power supply are connected to switched terminals of the one controllable semiconductor switch.

6. A flying capacitor multilevel converter as claimed in any one of claims 1 to 5, wherein the power supply comprises a voltage regulator.

7. A flying capacitor multilevel converter as claimed in any one of claims 1 to 6, wherein the power supply comprises a resistor and a Zener diode connected in series between input terminals of the power supply and a diode connected between a node connecting the resistor and the Zener diode and an output terminal of the power supply.

8. A flying capacitor multilevel converter as claimed in claim 7, wherein the power supply further comprises a second capacitor connected between output terminals of the power supply.

9. A flying capacitor multilevel converter as claimed in any one of claims 1 to 6, wherein the power supply comprises a low-dropout regulator.

10. A flying capacitor multilevel converter as claimed in any one of claims 1 to 6, wherein the power supply comprises a switching regulator.

11. A flying capacitor multilevel converter as claimed in claim 9 or 10, wherein the power supply further comprises a second capacitor connected between output terminals of the power supply.

12. A flying capacitor multilevel converter as claimed in claim 9, 10 or 11, wherein the power supply further comprises a diode and a third capacitor connected in series between input terminals of the power supply.

13. A flying capacitor multilevel converter as claimed in any one of claims 1 to 12, wherein a number of controllable semiconductor switches of the first group is equal to a number of controllable semiconductor switches of the second group.

14. A flying capacitor multilevel converter as claimed in any one of claims 1 to 13, comprising two, three, four or more phase leg circuits.

15. A method for supplying power in a flying capacitor multilevel converter comprising at least one phase leg circuit, each of the at least one phase leg circuit comprising a first group of series connected controllable semiconductor switches and a second group of series connected controllable semiconductor switches, each controllable semiconductor switch being provided with a driver configured to drive a control terminal of the respective controllable semiconductor switch, wherein the first group and the second group are connected in series between two input terminals of the converter, a phase output terminal connected to a node connecting the first group to the second group, at least one capacitor, each of the at least one capacitor being individually connected between a node connecting two adjacent controllable semiconductor switches of the first group and a node connecting respective two adjacent controllable semiconductor switches of the second group, and a power supply arrangement for the drivers of the controllable semiconductor switches, the power supply arrangement comprising at least two power supplies, wherein each power supply is configured to supply power to at least one driver,
wherein the method comprises:
supplying each power supply by a voltage over at least one controllable semiconductor switch.
